# EUROPEAN PATENT SPECIFICATION

(11) **EP 3 129 131 B1**
(45) Date of publication and mention of the grant of the patent: **06.05.2020**
(21) Application number: 15719344.2
(22) Date of filing: 08.04.2015
(51) Int. Cl.: B01D 67/00, B01D 69/04, B01D 71/02

(54) **A METHOD OF MAKING A SUPPORTED GAS SEPARATION MEMBRANE**
VERFAHREN ZUR HERSTELLUNG EINER GETRÄGERTEN GASTRENNUNGSMEMBRAN
PROCÉDÉ DE FABRICATION D'UNE MEMBRANE DE SÉPARATION DE GAZ SOUTENUE

(30) Priority: 10.04.2014 US 201461977790 P
(43) Date of publication of application: 15.02.2017
(73) Proprietor: Shell Internationale Research Maatschappij B.V., 2596 HR The Hague (NL)
(72) Inventor: SAUKAITIS, John Charles, Katy, Texas 77450 (US); PRECISE, Eric, Corpus Christi, Texas 78414 (US)
(74) Representative: Shell Legal Services IP
(86) International application number: PCT/US2015/024915
(87) International publication number: WO 2015/157412

(56) References cited:
- WO-A1-2013/063009
- WO-A1-2013/096186
- US-A1- 2004 237 780
- US-A1- 2011 232 821
- US-A1- 2012 167 768
- US-B1- 6 406 577
- SHIN-KUN RYI ET AL: "Repair of Pd-based composite membrane by polishing treatment", INTERNATIONAL JOURNAL OF HYDROGEN ENERGY, ELSEVIER SCIENCE PUBLISHERS B.V., BARKING, GB, vol. 36, no. 21, 27 July 2011 (2011-07-27) , pages 13776-13780, XP028391338, ISSN: 0360-3199, DOI: 10.1016/J.IJHYDENE.2011.07.120 [retrieved on 2011-08-03]

## Description

The invention relates to a method of manufacturing a supported gas separation membrane that is useful in the separation of a specific gas from a mixture of gases.

Composite gas separation modules, which include gas separation membranes, are commonly used to selectively separate specific gases from gas mixtures. These composite gas separation modules can be made of a variety of materials, but some of the more commonly used materials are polymers, ceramics and metallic composites.

Polymer membranes can provide an effective and cost-efficient option for the separation of gases at low temperatures, but they are often unsuitable for high temperature and pressure gas separation processes. This is because they tend to thermally decompose at the higher temperatures. The use of ceramic materials is often not preferred in commercial plant construction due to the ease with which they fracture and the difficulty in obtaining leak-tight seals when using these materials. Such polymer and ceramic membranes are often not capable of meeting tighter environmental regulations and increasing demand for high temperature processing, which can require the application of composite gas separation modules capable of operating at elevated temperatures and providing for high flux and high selectivity.

The prior art discloses various types of and methods for making gas separation membranes that are supported upon porous substrates and that may be used in high temperature gas separation applications. Many of the known techniques for depositing thin, dense, gas-selective membrane layers onto porous substrates use techniques that often leave a surface that is not uniform in thickness. One of these techniques is described in U.S. Patent No. 7175694.

U.S. Patent No. 7175694 discloses a gas separation module that comprises a porous metal substrate, an intermediate porous metal layer, and a dense hydrogen-selective membrane. This patent teaches that the intermediate porous metal layer may be abraded or polished to remove unfavorable morphologies from its surface, and, thereafter, a dense gas-selective metal membrane layer is deposited. Although U.S. Patent No. 7175694 suggests that the purpose of the abrading or polishing operations of the intermediate porous metal layers is to remove unfavorable morphologies from their surface, it does not suggest that polishing of these layers can enhance the ability to seal the metal surface in fewer steps leading to a thinner, leak-tight metal surface. It also fails to teach anything about the use of certain types of polishing media or conditions to facilitate the overall process of depositing a metal membrane layer upon a support and imposing surface characteristics on the metal membrane layer that provide for sealing and allowing the subsequent placement thereon of a thin, leak-tight, metal membrane layer.

One method for fabricating a palladium composite gas separation module is disclosed in U.S. Patent No. 8167976, which presents a method of making a metallic composite gas separation membrane system. The membrane system can comprise a porous support, and a first membrane layer of a gas-selective material overlying the porous support of which a substantial portion of the membrane layer is removed by the use of an ultra-fine abrasive to provide a membrane layer having a reduced membrane thickness. A second gas-selective material is deposited upon the membrane layer having the reduced membrane thickness to provide an overlayer of the second gas-selective material having an overlayer thickness. This method provides for a gas separation membrane system having a membrane layer with a reduced membrane thickness and an overlayer of the overlayer thickness.

Another method is disclosed in U.S. Patent Application Publication 2011/0232821, which describes a method of making a gas separation membrane system by providing a porous support material having deposited thereon a metal membrane layer, and imposing upon the surface thereof certain surface characteristics that provide for its activation. This surface activation enhances the placement thereon of a subsequent metal membrane layer.

WO 2013/096186 A1 describes a method of making a composite gas separation module by providing a porous support material having deposited thereon a metal membrane layer, by imposing upon the surface of the metal membrane layer certain surface characteristics including an abrasion pattern and a relatively high surface roughness that provides for surface activation that enhances the placement thereon of a subsequent metal membrane layer without the use of a chemical activating solution.

WO 2013/063009 A1 discusses a method for preparing a palladium-gold alloy gas separation membrane system comprising a gold-palladium alloy membrane on a porous substrate coated with an intermetallic diffusion barrier. The method includes an abrading step to increase surface roughness of the palladium to a desired range, a gold plating step with a solution of chloroauric acid (AuCl₄H) and hydrogen peroxide, followed by annealing to produce a palladium-gold alloy membrane.

There is a need to find improved methods of making supported gas-permeable metal membranes that are ultra-thin and gas leak-free. Particularly, these methods should be able to provide for the manufacture of an ultra-thin gas-permeable metal membrane with a minimum number of metal plating steps, which also results in reducing the number of other manufacturing steps. Additionally, there is a need to find ways to minimize the membrane metal thickness in order to reduce the amount of expensive metal that is laid down upon the support for the membrane and to provide for a final supported gas-permeable metal membrane having enhanced performance characteristics.

Accordingly, provided is a method for preparing a gas separation membrane system. This method comprises depositing a layer of gas-selective material comprising a gas-selective metal upon a surface of a tubular porous support, having a longitudinal axis, to thereby provide said tubular porous support having a gas-selective membrane layer; annealing said gas-selective membrane layer to provide a first annealed gas-selective membrane layer; providing a first abraded membrane surface by polishing said first annealed gas-selective membrane layer under a first controlled polishing condition with use of a belted abrading medium defined as having a centreline that further includes a structured abrasive article comprising a backing having bonded thereto an abrasive layer comprising a plurality of shaped abrasive composites, wherein said abrasive composites comprise abrasive grains dispersed in a polymeric binder; and placing a second layer of gas-selective material upon said first abraded membrane surface to provide a first overlaid membrane layer. The polishing is performed with a robotic polishing unit, and the first controlled polishing condition parameters include: a first belt speed, which is a linear rate at which a fixed point located on the centerline of said belted abrading medium moves relative to a starting point fixed in space on the centreline, wherein the belt speed is in the range of from 0.005 to 5 metres per second (1 to 1000 surface feet per minute (sfpm)); a first part speed, which is a rate of a number of turns of said tubular porous support completes in one minute around said longitudinal axis in revolutions per minute (rpm), wherein the part speed is in the range of from 20 to 600 rpm; a first lateral speed, which is a linear rate at which the centerline of said belted abrading medium and its contact point with said tubular porous support moves in parallel with the ground in millimetres per second (mmps), wherein the lateral speed is in the range of from 1 to 60 mmps; a first contact angle, which is a position at which said tubular porous support is held in contact at a point of contact on said belted abrading medium; and a first repetitions set, which is a number of full polishing motions with said belted abrading medium.
FIG. 1 is a front elevation view depicting the tubular porous support having a metal membrane layer in relationship to the robotically controlled belted abrading medium.
FIG. 2 is a side elevation view taken along 2-2 depicting the tubular porous support of FIG. 1 in relationship to the robotically controlled belted abrading medium.

This invention relates to a method of making a gas separation membrane system. The method uses a particular type of an abrading medium under controlled abrading or polishing of a gas-selective membrane layer, particularly a metal membrane layer comprising a gas-selective metal that is deposited upon a tubular porous support under conditions that are within specifically defined process parameters. The combination of the physical properties of the abrading medium and the manner or conditions under which the supported gas-selective metal membrane layer is abraded or polished provides for fewer required metal plating steps in the preparation of a final tightly-sealed, gas-selective metal membrane layer and for a thinner gas-selective metal membrane layer than would be possible with the use of various prior art methods. In the invention, a robot, specifically a robotic polishing unit, is used to control the manner or conditions under which the supported metal membrane layer is abraded or polished. It is to be recognized that the precise control of the abrading conditions can be achieved with the use of robotic control of the abrading medium when these abrading conditions are not able to be controlled by other means.

The porous support upon which the gas-selective metal membrane layer is deposited may include any porous metal material that is suitable for use as a support for the gas-selective material and which is permeable by hydrogen. The porous support is tubular in shape or geometry and has a surface that permits a layer of gas-selective material to be applied or deposited thereon. The tubular porous support has an inside surface and an outside surface that together define a wall thickness, with the inside surface defining a tubular conduit. The outside diameter (OD) of the tubular porous support can be in the range of from 1.5 cm to 13 cm, but, preferably, the outside diameter of the tubular porous support resides in the range of from 2.5 cm to 10 cm. More preferably, the outside diameter of the tubular porous support resides in the range of from 3 cm to 8 cm.

Although porous supports that are generally tubular in shape are particularly desirable in the embodiments described herein, it is to be recognized that other support shapes are also possible. For example, in some arrangements, supports that are substantially planar may be converted into a membrane system through modification of the techniques described herein. Such modifications will be evident to one having ordinary skill in the art and the benefit of the present disclosure.

The porous metal material of the tubular porous support can be selected from any of the materials known to those skilled in the art including, but not limited to, the stainless steels, (1) e.g., the 301, 304, 305, 316, 317, and 321 series of stainless steels, (2) the HASTELLOY® alloys, e.g., HASTELLOY® B-2, C-4, C-22, C-276, G-30, X and others, and (3) the INCONEL® alloys, e.g., INCONEL® alloy 600, 625, 690, and 718. The porous metal material, thus, can comprise an alloy that is hydrogen permeable and comprises iron and chromium. The porous metal material may further comprise an additional alloy metal such as nickel, manganese, molybdenum and any combination thereof.

One particularly desirable alloy suitable for use as the porous metal material can comprise nickel in an amount in the range of upwardly to about 70 weight percent of the total weight of the alloy and chromium in an amount in the range of from 10 to 30 weight percent of the total weight of the alloy. Another suitable alloy for use as the porous metal material comprises nickel in the range of from 30 to 70 weight percent, chromium in the range of from 12 to 35 weight percent, and molybdenum in the range of from 5 to 30 weight percent, with these weight percents being based on the total weight of the alloy. The INCONEL and HASTELLOY alloys can be preferred over other alloys.

The thickness (e.g. wall thickness as described above), porosity, and pore size distribution of the pores of the porous metal material are properties of the porous support that can be selected in order to provide a gas separation membrane system of the invention having a set of desired properties.

It is understood that, as the thickness of the porous support increases, the hydrogen flux across it will tend to decrease when the porous support is used in hydrogen separation applications. Operating conditions, such as pressure, temperature, and fluid stream composition, for example, may also impact the hydrogen flux. In any event, it can be desirable to use a porous support having a reasonably small thickness so as to provide for a high gas flux therethrough.

The wall thickness of the tubular porous support for the typical applications contemplated hereunder can be in the range of from about 0.1 mm to about 25 mm. Preferably, the wall thickness can reside in the range of from 1 mm to 15 mm. More preferably, the range can be from 2 mm to 12.5 mm, and, most preferably, from 2.5 mm to 8 mm.

The porosity of the porous metal material can be in the range of from 0.01 to about 1. The term porosity is defined herein as the proportion of non-solid volume to the total volume (i.e., non-solid and solid) of the porous metal material. A more typical porosity can be in the range of from 0.05 to 0.8, and, even from 0.1 to 0.6. The pore size distribution of the pores of the porous metal material can vary with the median pore diameter typically in the range of from about 0.1 micron to about 50 microns. More typically, the median pore diameter of the pores of the porous metal material can reside in the range of from 0.1 micron to 25 microns, and most typically, from 0.1 micron to 15 microns.

In the inventive method, there is initially provided a porous support, particularly a tubular porous support, which has been prepared by depositing or placing a metal membrane layer of a gas-selective metal or material on its surface by any suitable means or method known to those skilled in the art. Some of the suitable means or methods for preparing and forming a metal layer upon a porous support include those described in U.S. Patent 7175694, U.S. Patent 8167976, and U.S. Patent Application Publication 2011/0232821 A1. Examples of such suitable means or methods for depositing or placing the metal membrane layer upon a tubular porous support include the deposition of metal upon its surface by electroless plating, thermal deposition, chemical vapor deposition, electroplating, spray deposition, sputter coating, e-beam evaporation, ion beam evaporation, 3D printing techniques with powders, laser additive methods, aerosol jet methods, laser engineered net shaping, aerosol jet application, and spray pyrolysis. Other suitable methods of depositing the metal membrane layer upon a tubular porous support include those disclosed in U.S. Patent 7759711. A preferred deposition method is electroless plating.

The gas-selective metal or material, as the term is used herein, represents a material that is selectively permeable to a gas when it is in a form of a dense (i.e., having a minimum amount of pinholes, cracks, void spaces, etc. that allow the unhindered passage of gas), thin film. Thus, a dense, thin layer of the gas-selective material can function to selectively allow the passage of a desired gas while preventing passage of other gases. Possible gas-selective metals include palladium, platinum, gold, silver, rhodium, rhenium, ruthenium, iridium, niobium, and alloys of two or more thereof. In a preferred embodiment of the invention, the gas-selective material is a hydrogen-selective metal such as platinum, palladium, gold, silver and combinations thereof, including alloys. The more preferred gas-selective material is palladium, silver and alloys of palladium and silver. The most preferred gas-selective material is palladium.

The typical membrane thickness of the gas-selective metal membrane layer can be in the range of from 1 micron to 50 microns. That is, a leak-tight membrane system can have a thickness in the foregoing range. For purposes of this disclosure, a membrane system will be considered to be leak-tight if it can hold a pressure seal at a pressure of about 103 kPa (15 psi). For some gas separation applications, however, a membrane thickness in the upper end of this range may be too thick to provide for a reasonable gas flux that allows for the selection of a desired gas. Also, various prior art manufacturing methods often provide gas separation membrane systems having gas-selective membrane layers that are unacceptably thick, such that they provide for unacceptable gas separation capability. Generally, a membrane thickness that is greater than 20 microns is too large to provide for acceptable separation of hydrogen from a gas stream. Even a membrane thickness greater than 15 microns, or even 10 microns, is not desirable. Accordingly, in some embodiments, the membrane system can have a metal membrane layer thickness of about 20 microns or less, preferably a metal membrane layer thickness of about 10 microns or less.

It is an important aspect of the inventive method that a particular abrading medium is used in its polishing step in combination with controlling the polishing parameters to within specifically defined process conditions. This combination of features used in the polishing step provides for a surface of the metal membrane layer that is sealed in the fewest possible or a decreased number of plating steps. It accomplishes this by providing for use of the deposited metal of each layer in a more efficient manner than do comparative methods; and, thus, fewer platting steps are required for making an ultra-thin, gas-tight membrane within a membrane system. A reduction in the required number of platting steps to form the ultra-thin, gas-tight membrane is accomplished by better utilization of the deposited metal in the sealing of the metal membrane layers that are formed with each of the plating steps. Not only can thinner gas-tight membrane layers result, but cost savings can also be realized in terms of time, labor and materials cost.

The abrading medium used in the step of polishing any of the annealed metal membrane layers includes a structured abrasive article. Suitable structured abrasive articles include those described in US Patent 7278904.

More specifically, the structured abrasive article of the invention generally comprises an abrasive layer that comprises a plurality of shaped abrasive composites. The shaped abrasive composites are affixed or bonded to a backing, and, preferably, are disposed upon the backing according to a predetermined pattern (e.g., as an array). The shaped abrasive composites comprise abrasive grains or particles that are dispersed in a polymeric binder.

The backing on which the shaped abrasive composites are affixed includes any of those used in the abrasive art and which can be formed into an endless belt that may suitably be used in the inventive method. Examples of backings may include polymeric film, cloth, paper, nonwoven fibers, and reinforced fibers.

The abrasive grains or particles include any of those known in the abrasive art and further may include abrasive composites. Examples of useful abrasive grains include aluminium oxide, fused aluminium oxide, heat-treated aluminium oxide, ceramic aluminium oxide, silicon carbide, green silicon carbide, alumina-zirconia, ceria, iron oxide, garnet, diamond, cubic boron nitride, and combinations thereof.

The average particle size of the abrasive particles typically can be in the range of from at least 0.01, 1, 2, or even 3 micrometers (µm) up to and 35, 100, 250, 500, or even as much as 1,500 micrometers. It is preferred, however, for the average particle size to be in the range of from 1 µm to 12 µm, more preferred, from 2 µm to 10 µm, and, most preferred, from 3 µm to 8 µm.

Examples of polymeric binders that are useful in the abrasive composites include thermoplastic resins such as, for example, polyesters, polyamides, and combinations thereof; thermoset resins, such as, for example, phenolic resins, aminoplast resins, urethane resins, epoxy resins, acrylate resins, acrylated isocyanurate resins, cyanate resins, ureaformaldehyde resins, isocyanurate resins, acrylated urethane resins, acrylated epoxy resins, glue, and combinations thereof; and combinations thereof.

The abrasive composite is typically prepared by forming a slurry of abrasive grains and a solidifiable or polymerizable precursor of the binder resin (i.e., a binder precursor), contacting the slurry with the backing, and solidifying and/or polymerizing the binder precursor in a manner such that the resulting structured abrasive article has a plurality of shaped abrasive composites affixed to the backing. To promote an association bridge between the binder resin and the abrasive particles, a silane coupling agent is included in the slurry of abrasive grains and solidifiable or polymerizable precursor.

The shaped abrasive composite may be of any three-dimensional shape that results in at least one of a raised feature or recess on the exposed surface of the abrasive layer. Useful shapes include, for example, cubic, prismatic, pyramidal (e.g. square pyramidal or hexagonal pyramidal), truncated pyramidal, conical, frusto-conical. Combinations of differently shaped and/or sized abrasive composites may also be used. The abrasive layer of the structured abrasive may be continuous or discontinuous.

Structured abrasive articles that are useful for practicing the inventive process are commercially available. Examples of suitable commercially available abrasives are those marketed under the trade designation 3M™ Trizact™ abrasive belts.

The inventive method involves the use of a robotic polisher for the abrading or polishing step. The robotic polisher provides for the precise control of the polishing parameters which generally cannot be well controlled using other means of polishing. The combination of the use of the robotic polisher and the specifically defined abrading medium provides for the sealing of the metal membrane surface with fewer steps than would otherwise be required in other abrading procedures, while still allowing for the imposition of a favorable surface morphology on the metal membrane surface that allows plating to take place without any additional surface activation. With this combination of features, a thinner leak-tight membrane system can be imposed upon the surface of a tubular porous support in fewer process steps.

The gas-selective membrane layer may be polished with many of the computer numerically controlled robotic polishers that are available in the industry. The type will depend on the surface to be polished. However, it has been discovered that careful control of the polishing parameters, which also include the choice of the abrading medium, can lead to a more rapid sealing of the porous surface than that of the prior art.

Many suitable robotic polishers are offered for commercial sale by a variety of manufacturing entities. Examples of such entities include Yaskawa Motoman Robotics, FANUC America Corporation, and KuKa Robotics, and others. The use of a robotic polisher allows for the precise control of the polishing conditions under which the annealed gas-selective membrane layer is abraded to form an abraded membrane surface. It has been discovered that certain polishing conditions can affect the sealing rate of the surface of the metal membrane layer that lies upon the tubular porous support. These conditions can contribute to surface sealing or densification in fewer metal plating steps.

The use of the robotic polisher along with the specifically defined abrasives and polishing conditions allows for the preparation in fewer process steps of ultra-thin membranes that have comparatively smaller thicknesses and that are more leak tight than alternative membranes.

In the polishing step of one embodiment of the invention, the tubular porous support is placed in a computer controlled turning machine means for rotating the tubular porous support about a horizontal axis. The machine allows for control of the part speed, belt speed, belt or wheel pressure, number of repetitions along the surface of the gas selective surface, angle of contact of the polishing media with the surface of the gas selective layer and robotic speed controlling the polishing media across the surface of the membrane or the robotic speed controlling the movement of the rotating membrane surface over the rotating abrasive medium. The machine can control the media speed in a range of from 0.005 to 15 metres per second (0 to 3000 surface feet per minute (sfpm)), the part speed in revolutions per minute (rpm) in a range of from 0 to 500 rpm, the contact angle in the range of from 0 to 45°, the force applied from media in a range of from 7 to 344 kPa (1 to 50 psi), the depth of penetration of the media in a range of from 1 to 10 centimeters, and the lateral robot speed of the rotating gas selective surface across the rotating abrasive medium in a range of from 1 to 50 millimeters per second (mmps), and the number of repetitions back-and-forth across the membrane from 1 to 4 or more.

Generally, the belted abrading medium is held in a fixed lateral position, and the tubular porous support is spun and moved laterally with respect to the belted abrading medium (e.g., with the robotic polishing unit). In alternative embodiments, the tubular porous support can again be spinning but held in a fixed lateral position, and the rotary fibrous buff can be moved laterally with respect to the tubular porous support during a polishing operation.

In the polishing step utilizing a commercially available abrading medium, Trizact belt A3, the media speed should be in a range of from 0.25 to 5 metres per second (50 to 1000 surface feet per minute (sfpm)), the part speed in a range of from 100 to 500 rpm, the contact angle in the range of from 0 to 45°, the force applied in the range of from 6.9 kPa to 344kPa (1 to 50 psi), the depth of penetration of the media in a range of 1 to 10 centimeters, and the lateral robot speed of the rotating gas selective surface across the rotating abrasive media in the range of from 1 to 250 millimeters per second (mmps), the number of repetitions of from 1 to any desired number. The preferred range for the media speed is from 0.25 to 5 metres per second (50 to 1000 surface feet per minute (sfpm)), the part speed is in a range of from 100 to 500 rpm, the contact angle is 0°, the force applied is in a range of 103 kPa to 172 kPa (15 psi to 25 psi), the depth of penetration of the media in a range of from 0.5 to 1.5 centimeters, and the robot speed of the rotating gas selective layer across the rotating abrasive media in the range of from 10 to 30 millimeters per second (mmps) and the repetitions is from 1 to 4.

As noted above, the polishing parameters and their control are an important feature of the inventive method. These parameters include belt speed, part speed, lateral speed, contact angle, force and repetitions. In the inventive method, the conditions under which the polishing step is conducted are controlled so as to provide the desired polishing effect. Moreover, when multiple deposition and polishing operations are conducted, the polishing parameters can be the same or different in each polishing operation to produce a desired polishing effect. Thus, the controlled polishing condition includes the regulation of one or more of the aforementioned polishing parameters.

Each of the polishing parameters are defined below with reference to the FIGs.

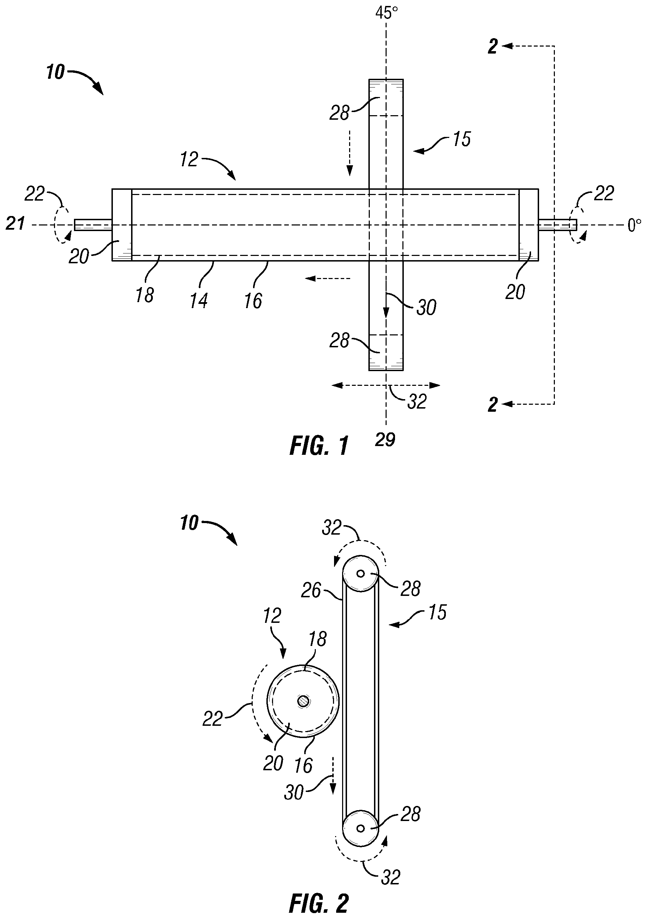

Referring to FIG. 1, there is presented a front elevation view of a tubular porous support 12, having deposited thereon a layer of gas-selective metal membrane 14, and a robotically controlled belted abrading medium 15.

The tubular porous support 12 with its metal membrane layer 14 has a surface 16 and a tubular wall 18 defining a wall thickness. The tubular shaped porous support 12 is affixed to a turning device or means such as a lathe (not shown) by holding means 20. Holding means 20 may be any suitable means such as a clamping means using, for example, a chuck or collet, or a faceplace with a clamp or any other suitable means for affixing the tubular shaped porous support 12 to a spinning device such as a spindle. The tubular shaped porous support 12 is rotated about its axis 21 in the direction as shown by arrows 22 by the turning device or means.

This tube turning device is held by a robotic arm. The belted abrading medium 15 may be defined as having a belt width 26 and is moved linearly by the aid of rollers 28. The belt width 26 can be in the range of from 2.5cm to 61cm (1 inch to 24 inches), or in the range of from 5cm to 30cm (2 inches to 12 inches).

The robotic arm holding the turning device also controls the lateral movement of the rotating gas selective layer across the rotating abrasive medium 15 in the direction shown by arrow 30. The centerline 29 of the belted abrading medium 15 as shown is at a right angle to axis 21. Alternatively a robotic arm holding the rotating abrasive belt can be moved across the rotating gas selective layer.

To impose upon surface 16 a desired surface morphology that provides for an activated surface having enhanced activation properties for the placement thereon of an additional metal membrane layer, the belted abrading medium 15 is pressed against the tubular shaped porous support 12 and moved in the directions indicated by arrow 32. The force, F, at which the belted abrading medium 15 is pressed against the tubular shaped porous support 12, the rotational speed at which the tubular shaped porous support 12 is rotated about its axis as shown by arrows 22, the speed at which planar abrading belt 26 is moved along the direction as shown by arrow 30, and the properties of the abrading surface of the belted abrading medium 15 are all properly adjusted and controlled so as to provide for the desired surface morphology to activate surface 16.

FIG. 2 presents a side elevation view of section 2-2 of FIG.1 showing system 10 from its side. Holding means 20 is shown with tubular shaped porous support 12 placed on the opposite side of holding means 20. Tubular wall 18 is shown with broken lines. Tubular shaped porous support 12 is rotated about its axis in the direction shown by arrow 22. The belted abrading medium 15 is moved in the direction shown by arrow 30 by rollers 28 that are rotating about their axes in the direction shown by arrows 32. Belted abrading medium 15 is pressed against surface 16 and can be moved along the length of tubular shaped support 12. As indicated above, the force at which belted abrading medium 15 is pressed against the tubular shaped porous support 12, the relative movement speeds of the tubular shaped support 12, planar abrading belt 26, and the properties of the belted abrading medium 15 are adjusted and controlled so as to impose the desired surface morphology upon surface 16.

The belt speed is the linear rate at which a fixed point located on the centerline 29 of the belted abrading medium 15 moves relative to a starting point that is fixed in space on the centerline 29 reported in surface feet per minute (sfpm). The belt speed parameter or polishing condition is controlled to within the range of from 0.005 to 5 metres per second (1 mpm to 1000 sfpm). It is preferred for the belt speed to be controlled to within the range of from 0.025 to 1.8 metres per second (5 to 350 sfpm), and, most preferred, the belt speed should be in the range of from 0.05 to 1.0 metres per second (10 to 200 sfpm).

The part speed is the rate of number of turns the tubular shaped porous support 12 completes in one minute around axis 21 (*i.e.,* the angular rate), reported in revolutions per minute (rpm). The part speed parameter or polishing condition is controlled to within the range of from 20 rpm to 600 rpm. It is preferred for the part speed to be controlled to within the range of from 50 to 500 rpm, and, most preferred, the part speed should be in the range of from 100 to 200 rpm.

The lateral speed is the linear rate at which the centerline 29 of the belted abrading medium 15 and its contact point with the tubular shaped porous support 12 moves in parallel with the ground reported in millimeters per second (mmps). The lateral speed can be defined similarly in embodiments in which the tubular porous support 12 moves and the belted abrading medium 15 is held fixed. The lateral speed parameter or polishing condition is controlled to within the range of from 1 mmps to 60 mmps. It is preferred for the lateral speed to be controlled to within the range of from 5 to 50 mmps, and, most preferred, the lateral speed should be in the range of from 10 to 30 mmps.

The contact angle is the position at which the tubular shaped porous support 12 is held when it is in contact at a point of contact on the belted abrading medium 15. This position is defined as the angle of the axis 21 relative to the ground or other point of reference when the axis 21 is rotated about the center of gravity of the tubular shaped porous support 12 through the vertical plane that is perpendicular to the ground or other point of reference and passes through axis 21 at the center of gravity of the tubular shaped porous support 12. It is understood that as used herein the contact angle of 0° is when the axis 21 is parallel with the ground or other point of reference and 90° when the axis 21 is perpendicular to the ground or other point of reference. The contact angle should typically be in the range of from 0 degree to less than 90 degrees. It is preferred for the contact angle to be in the range of from 0° to 50°, and, most preferred, the contact angle is from 0° to 45°.

The force is the amount of pressure pressed against or being exerted on the tubular shaped porous support 12 at the point of contact of the belted abrading medium 15 and the tubular shaped porous support 12 in pounds per square inch (psi). The force that is applied to the tubular shaped porous support 12 should be in the range of from 34 kPa to 241 kPa (5 psi to 35 psi). It is preferred for the applied force to be in the range of from 69 kPa to 207 kPa (10 to 30 psi), and, most preferred, from 103 kPa to 172 kPa (15 to 25 psi).

A repetition constitutes a full polishing motion with the belted abrading medium. A polishing motion is when the belted abrading medium 15 remains in contact with the tubular shaped porous support 12 and passes along the one full length of the tubular porous support 12 from one end to the other end and back again. A full polishing motion can be accomplished by moving the tubular porous support laterally with respect to the belted abrading medium, or by holding the tubular porous support in a fixed lateral position and laterally moving the belted abrading medium. It is desirable for number of repetitions to be in the range of from 1 to 8, and, preferably, from 2 to 6, and, most preferably, from 1 to 4.

After the placement of a metal membrane layer upon the surface of the tubular porous support, the metal membrane layer is annealed. This annealing or heat treating may be done in the presence of or under a gaseous atmosphere that can include air, or hydrogen, or oxygen, or any of the inert gases such as nitrogen, helium, argon, neon, carbon dioxide or a combination of any of these. In some embodiments, the gaseous atmosphere can be a mixture of argon, nitrogen and hydrogen, more preferably a mixture of hydrogen and nitrogen, and most preferably hydrogen. The heat treatment may be conducted under temperature and pressure conditions that suitably provide an annealed metal membrane layer. The temperature, thus, can be in the range of from 350°C to 600°C, preferably, from 400°C to 550°C, and, most preferably, from 450°C to 525°C. The annealing time can range upwardly to 48 hours or longer, but, more typically, the annealing time is from 1 to 24 hours.

In general, the inventive method includes the multiple steps of: (a) placing or depositing a gas-selective metal membrane layer upon a tubular porous support; (b) annealing the resulting layer of gas-selective metal; (c) polishing the resulting annealed membrane layer of gas selective metal with a specific type of abrading medium, as described herein; and (d) placing another layer of gas-selective metal upon the tubular porous support. The steps of annealing, polishing, and depositing metal may be repeated through one or more cycles until a leak-tight membrane system is provided. Typically, no more than 1 to 4 cycles of these steps are required.

If, for example, the resulting membrane layer is not leak-tight after the application of steps (a) through (c), additional layers of membrane metal may be added until the membrane system is leak-tight. This is done, as stated above, by the application of the annealing step followed by the polishing step followed by the metal-depositing step. If the membrane is still not leak-tight, then the annealing, polishing and metal depositing steps can be repeated until a final gas-tight membrane is provided.

One of the advantages of the inventive method is that the number of repeated cycles of annealing, polishing, depositing and annealing that is required to provide the leak-tight membrane system is reduced relative to comparative methods, and, the overall membrane thickness can be reduced as well.

In the inventive method, a layer of gas-selective material is deposited upon a surface of a tubular porous support to thereby provide the tubular porous support with a gas-selective membrane layer. The gas-selective membrane layer is then annealed to provide a first annealed gas-selective membrane layer. A first abraded membrane surface is provided by polishing the first annealed gas-selective membrane layer under a first controlled polishing condition with an abrading medium that includes a structured abrasive article comprising a backing having bonded thereto an abrasive layer comprising a plurality of shaped abrasive composites that comprise abrasive grains dispersed in a polymeric binder. A second layer of gas-selective material is then deposited on the first abraded membrane surface to provide a first overlaid membrane layer.

This first overlaid membrane layer may be annealed. If the first overlaid membrane layer does not provide for a leak-tight membrane system, a second series of annealing, polishing, and depositing steps is applied to the first overlaid membrane layer. In this second series of steps, the second annealed overlaid membrane layer is polished to provide a second abraded membrane surface. This second abraded membrane surface is plated to provide a second overlaid membrane layer.

This second overlaid membrane layer may be annealed. If the second overlaid membrane layer does not provide for a leak-tight membrane system, then a third series of annealing, polishing, and depositing steps is applied to the second overlaid membrane layer. In this third series of steps, the second overlaid membrane layer is annealed to give a third annealed membrane overlayer. The third annealed membrane overlayer is polished with the abrading medium under a controlled polishing condition to provide a third abraded membrane surface. Then, a fourth layer of gas-selective material is deposited upon the third abraded membrane surface to provide a third overlaid membrane layer.

This third overlaid membrane layer may be annealed. If the third overlaid membrane layer does not provide for a leak-tight membrane system, then a fourth series of annealing, polishing and depositing steps is applied to the third overlaid membrane layer to provide a fourth annealed gas-selective membrane layer. The fourth annealed gas-selective membrane layer is then polished or abraded with the abrading medium under a fourth controlled polishing condition to provide the fourth abraded membrane surface. Then, a fifth layer of gas-selective material is placed or deposited upon the fourth abraded membrane surface to provide a fourth overlaid membrane layer.

The fourth overlaid membrane layer may be annealed to provide the gas separation membrane system of the invention.

In most cases, no more than two to four cycles of annealing, polishing and depositing will be required to provide a leak-tight membrane system of the invention.

The following examples are provided to illustrate the invention but are not intended to be limiting.

### Example 1

This Example 1 describes the preparation of a gas separation membrane system using a belted structured abrasive article with a polishing robot capable of precisely controlling the polishing conditions during the polishing step of the preparation method, and it presents the result of the preparation procedure.

A 2.5cm (1 inch) OD x 38cm (15 inch) length x 0.25cm (0.1 inch) wall porous Hastelloy X stainless support supplied by Mott Corporation was wrapped above and below membrane with one layer of Teflon tape. The support was generally tubular in shape and was closed on one end.

### Initial Preparation of Tubular Porous Support

Two 500 ml-Erlenmeyer flasks, each containing 0.20-0.25 g of eggshell catalyst, 1 micron centered distribution, were mixed with 250 ml of DI water. The resulting slurry was divided equally between 4 L of DI water in a 5 L glass beaker and 3.5 L of DI water in a 4 L glass beaker. The slurries were well mixed. The porous tube assembly was connected to vacuum and the vacuum adjusted to 25-30" Hg. The porous metal support assembly was immersed into slurry. The additional solution was added until there was no more reserve solution. The support was removed from the slurry solution. Any excess water inside the membrane was removed. The Teflon tape was then removed and the vacuum was disconnected. The support was dried in an air circulating oven for at least 2 hours at 140°C. The support was then re-connected to vacuum at 25-30" Hg. The powder on the surface of the porous section was smoothed, removing excess catalyst, and the vacuum was disconnected.

This process was then repeated with eggshell catalyst having a 0.5 micron centered distribution deposition, with the exception that surface smoothing was omitted with the 2^{nd} catalyst.

### Plating Step

The plating solution utilized in this Example comprised 250 grams deionized water, 198 ml of 28-30% ammonium hydroxide solution, 4.0 grams of tetraamminepalladium (II) chloride (Pd(NH₃)₄Cl₂H₂O), 40.1 grams ethylenediaminetetraacetic acid disodium salt (Na₂EDTA₂H₂O) and sufficient deionized water to make 1 liter total volume to provide a solution with a Pd metal ion concentration of about 4 g/L. A peristaltic pump was utilized to circulate the solution about the support while applying vacuum to the support. Plating took place at a temperature of 50 °C for 5-10 minutes under 13 kPA - 20 kPa (4-6 inches Hg) vacuum and then continuously for 90 minutes. The bath was circulated at a rate of 1.4 liters per minute. The membrane assembly was removed from the plating bath and washed with deionized water until the conductivity was less than 5 µS. The membrane was dried in an air circulating oven for at least 2 hours at 140 °C and cooled to 40 °C.

### Annealing Step

The membrane assembly was annealed by increase the temperature from 40 °C to 400°C @ 2°C / min. in nitrogen. The gas mixture was transitioned from 100% nitrogen to 100% hydrogen over the period of 1 hour and the heating continued to 520 °C. The membrane assembly was held at this temperature overnight. The membrane assembly was then cooled to 400°C and transitioned back to pure nitrogen and held for 2 hours before cooling to room temperature.

### Polishing Step

The membrane was polished on a robotic polisher from Acme manufacturing with a Trizact A3 belt from 3M with the following conditions:

| 1ST POLISHING | | | | | | | | | | | |
|---|---|---|---|---|---|---|---|---|---|---|---|
| HEAD | O.D. | START | END | ANGLE | MEDIA SPEED | PARTSPEED | FORCE | DEPTH | SPEED | PROCESS | REPS |
| 2 | 2.4 | 10 | 60 | 0 | 50 | 120 | 20 | 1 | 25 | 1 | 2 |
| 2 | 2.4 | 10 | 60 | 0 | 500 | 120 | 20 | 1 | 25 | 1 | 2 |

| 2ND POLISHING | | | | | | | | | | | |
|---|---|---|---|---|---|---|---|---|---|---|---|
| HEAD | O.D. | START | END | ANGLE | MEDIA SPEED | PARTSPEED | FORCE | DEPTH | SPEED | PROCESS | REPS |
| 2 | 2.4 | 10 | 60 | 0 | 50 | 120 | 20 | 1 | 25 | 1 | 2 |
| 2 | 2.4 | 10 | 60 | 0 | 500 | 120 | 20 | 1 | 25 | 1 | 4 |

| 3RD POLISHING | | | | | | | | | | | |
|---|---|---|---|---|---|---|---|---|---|---|---|
| HEAD | O.D. | START | END | ANGLE | MEDIA SPEED | PARTSPEED | FORCE | DEPTH | SPEED | PROCESS | REPS |
| 2 | 2.4 | 10 | 60 | 0 | 50 | 120 | 20 | 1 | 25 | 1 | 2 |

The data chart above the terms have the following meanings: Head designates a 1 for polishing wheel and a 2 for polishing belt. O.D. represents the outer diameter of the metal support in centimeters. Start position is the point in cm from the left end of the tube where the polishing media makes contact. End is the farthest point in cm from the left end of the tube that the media will maintain contact with the support. Angle represents the angle at which the support is held by the robot during polishing with 0 being parallel to the ground and perpendicular to the media. Note the angle can be adjusted both positively and negatively and achieve the same or similar results. Media Speed is the physical speed of the polishing media in standard feet per minute. Part Speed is how fast the support is rotated by the robot in revolutions per minute. Force is how much pressure is being exerted on the membrane over a given surface area in pounds per square inch. Depth is how far in cm the membrane is pushed into the polishing media. Speed is the lateral speed of the robot moving the support against the media in mm per second. Process is for belt polishing only and designates a 1 for the support being in contact at the slack of the belt and a 2 for the support being in contact at the wheel. Reps are the repetitions with 1 rep being one full polishing motion from start to end to start. In all cases, the tubular porous support was moved laterally with the robotic polishing unit and the belted abrading medium was held in a fixed lateral position.

The plating, washing, drying, annealing and polishing process was repeated until a leak tight membrane was achieved. The process was repeated 4 times. The sealed membrane was leak-tight and no leak development was detected at 689 kPa (100 psi) after testing. The membrane had a permeance of 41 Nm³/m²/hr/bar.

### Example 2

This Example describes the preparation of comparison gas separation membranes and presents comparison data relating to the properties of the comparison membrane systems and the inventive membrane systems made under the robotic controlled polishing conditions.

The membrane assembly of Example 2 was made according the method described in U.S. Patent 8167976.

The preparation of the membrane assembly was similar to the preparation of the membrane assembly of Example 1 with small differences. In laying down the eggshell catalyst, the steps were repeated three times with progressively smaller eggshell catalyst particle distributions. The respective distributions were 4 µm, 1 µm and 0.5 µm. Surface smoothing was omitted with the last application of the eggshell catalyst. In the annealing step, a mixture of 3% hydrogen in nitrogen was added and the heating continued to 520 °C. The membrane assembly was held at this temperature overnight. The membrane assembly was cooled to 400°C and transitioned back to pure nitrogen and held for 2 hours before cooling to room temperature.

The membrane assembly of this Example was polished on a lathe at 20 rpm with sandpaper attached to a sanding block. Starting near one of the welds at the porous section, pressure was applied to the sanding block against the support. The sandpaper was slowly moved up and across until reaching the opposite end. The process was repeated starting on the other end. Clockwise and counter clockwise rotation was utilized. The motion was repeated until the sandpaper had a smooth shine on it or there was grit missing. Rotation was stopped while switching the sandpaper. The steps were repeated while gradually decreasing sandpaper abrasive size. A micro fiber polishing cloth was utilized to wipe the membrane until the polishing cloth no longer visibly picked up any palladium. The surface of the membrane was lightly cross-hatched using a fresh piece of sandpaper of the smallest size. 1500 and 2000 grit papers were utilized for the polishing operation. The plating, washing, drying, annealing and polishing process was repeated 8 times until a leak-tight membrane was achieved. The membrane had a permeance of 20 Nm³/m²/hr/bar and no leak development was detected at 103 kPa (15 psi) after testing.

The table below shows additional examples of the prior art method compared to that described in this invention.

| **CRI-#** | **Support** | **# of Platings** | **Sealed @ 15PSI** | **Sealed @100PSI** | **Thickness (microns)** | **Permeance (Nm³/m²/hr/bar)** | **Polishing Type** |
|---|---|---|---|---|---|---|---|
| **346** | MMC HX IO | 6 | ✔ | x | 8.04 | 20 | Lathe/Sand Paper |
| **349** | MMC HX IO | 8 | ✔ | x | 8.67 | 24 | Lathe/Sand Paper |
| **350** | MMC HX IO | 6 | ✔ | x | 8.69 | 35.05 | Lathe/Sand Paper |
| **357** | MMC HX IO | 9 | ✔ | x | 13.51 | 27.5 | Lathe/Sand Paper |
| **358** | MMC HX IO | 8 | ✔ | x | 11.92 | 20 | Lathe/Sand Paper |
| ***360** | MMC HX IO | 7 | x | x | 7.02 | NA | Lathe/Sand Paper |
| | | | | | | | |
| | | | | | | | |
| **373** | MMC HX IO | 4 | ✔ | ✔ | 5.01 | 41 | Robotic/Computer |
| **369** | MMC HX IO | 4 | ✔ | ✔ | 6.04 | 40 | Robotic/Computer |
| ***360R** | MMC HX IO | 1 | ✔ | ✔ | 7.18 | 33.7 | Robotic/Computer |
| *Denotes original failed processing of 360 by old procedure seperately from secondary processing of 360 by new procedure. Designation is 360R for 360-Recycled. | | | | | | | |

The data presented in the table show that the membrane systems prepared in accordance with the inventive method have gas-tight membranes of smaller thickness made with fewer platting steps and which exhibit improve permeance over the comparative membrane systems.

## Claims

1. A method for preparing a gas separation membrane system, wherein said method comprises:
(a) depositing a layer of gas-selective material comprising a gas-selective metal upon a surface of a tubular porous support, having a longitudinal axis, to thereby provide said tubular porous support having a gas-selective membrane layer;
(b) annealing said gas-selective membrane layer to provide a first annealed gas-selective membrane layer;
(c) providing a first abraded membrane surface by polishing said first annealed gas-selective membrane layer under a first controlled polishing condition with use of a belted abrading medium defined as having a centreline that further includes a structured abrasive article comprising a backing having bonded thereto an abrasive layer comprising a plurality of shaped abrasive composites that comprise abrasive grains dispersed in a polymeric binder; and
(d) placing a second layer of gas-selective material comprising a gas-selective metal upon said first abraded membrane surface to provide a first overlaid membrane layer,
wherein said polishing is performed with a robotic polishing unit, and
wherein said first controlled polishing condition parameters include:
a first belt speed, which is a linear rate at which a fixed point located on the centerline of said belted abrading medium moves relative to a starting point fixed in space on the centreline, wherein the belt speed is in the range of from 0.005 to 5 metres per second (1 to 1000 surface feet per minute (sfpm)),
a first part speed, which is a rate of a number of turns of said tubular porous support completes in one minute around said longitudinal axis in revolutions per minute (rpm), wherein the part speed is in the range of from 20 to 600 rpm,
a first lateral speed, which is a linear rate at which the centerline of said belted abrading medium and its contact point with said tubular porous support moves in parallel with the ground in millimetres per second (mmps), wherein the lateral speed is in the range of from 1 to 60 mmps,
a first contact angle, which is a position at which said tubular porous support is held in contact at a point of contact on said belted abrading medium, and
a first repetitions set, which is a number of full polishing motions with said belted abrading medium, wherein a full polishing motion is when the belted abrading medium remains in contact with the tubular shaped porous support and passes along the one full length of the tubular porous support from one end to the other end and back again.

2. A method as recited in claim 1**,** further comprising:
(e) annealing said first overlaid membrane layer to provide a second annealed gas-selective membrane layer;
(f) providing a second abraded membrane surface by polishing said second annealed gas-selective membrane layer with said abrading medium under a second controlled polishing condition; and
(g) placing a third layer of gas-selective material comprising a gas-selective metal upon said second abraded membrane surface to provide a second overlaid membrane layer.

3. A method as recited in claim 2, further comprising:
(h) annealing said second overlaid membrane layer to provide a third annealed gas-selective membrane layer;
(i) providing a third abraded membrane surface by polishing said third annealed gas-selective membrane layer with said abrading medium under a third controlled polishing condition; and
(j) placing a fourth layer of gas-selective material comprising a gas-selective metal upon said third abraded membrane surface to provide a third overlaid membrane layer.

4. A method as recited in claim 3, further comprising:
(k) annealing said third overlaid membrane layer to provide a fourth annealed gas-selective membrane layer;
(1) providing a fourth abraded membrane surface by polishing said fourth annealed gas-selective membrane layer with said abrading medium under a fourth controlled polishing condition; and
(m) placing a fifth layer of gas-selective material comprising a gas-selective metal upon said fourth abraded membrane surface to provide a fourth overlaid membrane layer.

5. A method as recited in claim 1, wherein said contact angle is in the range of from 0 to 45°.

6. A method as recited in claim 5, wherein said repetitions is in the range of from 1 to 4.

## Patentansprüche

1. Verfahren zum Herstellen eines Gastrennungsmembransystems, wobei das Verfahren Folgendes umfasst:
(a) Abscheiden einer Schicht aus gasselektivem Material, das ein gasselektives Metall umfasst, auf einer Oberfläche eines röhrenförmigen porösen Trägers mit einer Längsachse, um dadurch den röhrenförmigen porösen Träger mit einer gasselektiven Membranschicht bereitzustellen;
(b) Glühen der gasselektiven Membranschicht, um eine erste geglühte gasselektive Membranschicht bereitzustellen;
(c) Bereitstellen einer ersten geschliffenen Membranoberfläche durch Polieren der ersten geglühten gasselektiven Membranschicht unter einer ersten kontrollierten Polierbedingung unter Verwendung eines als eine Mittellinie aufweisend definierten Bandschleifmediums, das ferner ein strukturiertes Schleiferzeugnis umfasst, das einen Träger umfasst, an dem eine Schleifschicht haftet, die mehrere geformte Schleifverbundstoffe umfasst, die in einem polymeren Bindemittel dispergierte Schleifkörner umfassen; und
(d) Aufbringen einer zweiten Schicht aus gasselektivem Material, das ein gasselektives Metall umfasst, auf die erste geschliffene
Membranoberfläche, um eine erste darübergelegte Membranschicht bereitzustellen,
wobei das Polieren mit einer Roboterpoliereinheit durchgeführt wird und
wobei die Parameter der ersten kontrollierten Polierbedingung Folgendes umfassen:
eine erste Bandgeschwindigkeit, die eine lineare Rate ist, mit der ein fester Punkt, der sich auf der Mittellinie des Bandschleifmediums befindet, sich bezogen auf einen Startpunkt, der im Raum auf der Mittellinie festgelegt ist, bewegt, wobei die Bandgeschwindigkeit im Bereich von 0,005 bis 5 Meter pro Sekunde (1 bis 1000 Oberflächenfuß pro Minute (surface feet per minute - sfpm)) liegt,
eine erste Teilgeschwindigkeit, die eine Rate einer Anzahl von Umdrehungen, die der röhrenförmige poröse Trägers in einer Minute um die Längsachse vollzieht,
in Umdrehungen pro Minute (revolutions per minute - rpm) ist, wobei die Teilgeschwindigkeit im Bereich von 20 bis 600 rpm liegt,
eine erste Quergeschwindigkeit, die eine lineare Rate, mit der die Mittellinie des Bandschleifmediums und dessen Kontaktpunkt mit dem röhrenförmigen porösen Träger sich parallel zum Boden bewegen, in Millimeter pro Sekunde (millimetres per second - mmps) ist, wobei die Quergeschwindigkeit im Bereich von 1 bis 60 mmps liegt,
einen ersten Kontaktwinkel, der eine Position ist, an welcher der röhrenförmige poröse Träger an einem Kontaktpunkt auf dem Bandschleifmedium in Kontakt gehalten wird, und
einen ersten Wiederholungssatz, der eine Anzahl vollständiger Polierbewegungen mit dem Bandschleifmittel ist, wobei eine vollständige Polierbewegung dann gegeben ist, wenn das Bandschleifmedium mit dem röhrenförmigen porösen Träger in Kontakt bleibt und sich entlang der einen vollständigen Länge des röhrenförmigen porösen Trägers von einem Ende zum anderen Ende und wieder zurück bewegt.

2. Verfahren nach Anspruch 1, ferner Folgendes umfassend:
(e) Glühen der ersten darübergelegten Membranschicht, um eine zweite geglühte gasselektive Membranschicht bereitzustellen;
(f) Bereitstellen einer zweiten geschliffenen Membranoberfläche durch Polieren der zweiten geglühten gasselektiven Membranschicht mit dem Schleifmedium unter einer zweiten kontrollierten Polierbedingung; und
(g) Aufbringen einer dritten Schicht aus gasselektivem Material, das ein gasselektives Metall umfasst, auf die zweite geschliffene Membranoberfläche, um eine zweite darübergelegte Membranschicht bereitzustellen.

3. Verfahren nach Anspruch 2, ferner Folgendes umfassend:
(h) Glühen der zweiten darübergelegten Membranschicht, um eine dritte geglühte gasselektive Membranschicht bereitzustellen;
(i) Bereitstellen einer dritten geschliffenen Membranoberfläche durch Polieren der dritten geglühten gasselektiven Membranschicht mit dem Schleifmedium unter einer dritten kontrollierten Polierbedingung; und
(j) Aufbringen einer vierten Schicht aus gasselektivem Material, das ein gasselektives Metall umfasst, auf die dritte geschliffene Membranoberfläche, um eine dritte darübergelegte Membranschicht bereitzustellen.

4. Verfahren nach Anspruch 3, ferner Folgendes umfassend:
(k) Glühen der dritten darübergelegten Membranschicht, um eine vierte geglühte gasselektive Membranschicht bereitzustellen;
(l) Bereitstellen einer vierten geschliffenen Membranoberfläche durch Polieren der vierten geglühten gasselektiven Membranschicht mit dem Schleifmedium unter einer vierten kontrollierten Polierbedingung; und
(m) Aufbringen einer fünften Schicht aus gasselektivem Material, das ein gasselektives Metall umfasst, auf die vierte geschliffene Membranoberfläche, um eine vierte darübergelegte Membranschicht bereitzustellen.

5. Verfahren nach Anspruch 1, wobei der Kontaktwinkel im Bereich von 0 bis 45° liegt.

6. Verfahren nach Anspruch 5, wobei die Anzahl der Wiederholungen im Bereich von 1 bis 4 liegt.

## Revendications

1. Procédé de préparation d'un système de membrane de séparation de gaz, ledit procédé comprend :
(a) le dépôt d'une couche de matériau sélectif par rapport à un gaz comprenant un métal sélectif par rapport à un gaz sur une surface d'un support poreux tubulaire, ayant un axe longitudinal, pour fournir ainsi ledit support poreux tubulaire à couche membranaire sélective par rapport à un gaz ;
(b) le recuit de ladite couche de membrane sélective par rapport à un gaz pour fournir une première couche de membrane recuite sélective par rapport à un gaz ;
(c) l'utilisation d'une première surface de membrane abrasée par polissage de ladite première couche de membrane recuite sélective par rapport à un gaz selon un premier état de polissage régulé à l'aide d'un support abrasif à courroie, défini comme ayant une ligne médiane qui comporte en outre un article abrasif structuré comprenant un support lié à une couche abrasive comprenant une pluralité de composites abrasifs façonnés qui comprennent des grains abrasifs dispersés dans un liant de polymère ; et
(d) le placement d'une seconde couche de matériau sélectif par rapport à un gaz comprenant un métal sélectif par rapport à un gaz sur ladite première surface de membrane abrasée pour fournir une première couche de membrane superposée,
ledit polissage étant réalisé par une unité de polissage robotisée et
lesdits premiers paramètres d'état de polissage régulé comportant :
une première vitesse de courroie, qui est un taux linéaire selon lequel un point fixe situé sur la ligne médiane dudit support abrasif à courroie se déplace par rapport à un point de départ fixé dans l'espace sur la ligne médiane, la vitesse de la courroie étant dans la plage de 0,005 à 5 mètres par seconde (1 à 1 000 pieds de surface par minute (sfpm)), une vitesse de première partie, qui est un taux d'un certain nombre de tours dudit support tubulaire poreux effectué en une minute autour dudit axe longitudinal en tours par minute (tr/min), la vitesse de partie se situant dans la plage de 20 à 600 tr/min, une première vitesse latérale, qui est un taux linéaire selon lequel la ligne médiane dudit support abrasif à courroie et son point de contact avec ledit support tubulaire poreux se déplacent parallèlement au sol en millimètres par seconde (mm/s), la vitesse latérale étant dans la plage d'1 à 60 mm/s, un premier angle de contact, qui est une position à laquelle ledit support tubulaire poreux est maintenu en contact au niveau d'un point de contact sur ledit support abrasif à courroie et un premier ensemble de répétitions, qui est un certain nombre de mouvements de polissage complets avec ledit support abrasif à courroie, un mouvement de polissage complet se produisant lorsque le support abrasif à courroie reste en contact avec le support poreux tubulaire et passe le long de la longueur totale du support poreux tubulaire d'un bout à l'autre et vice-versa.

2. Procédé selon la revendication 1, comprenant en outre :
(a) le recuit de ladite première couche de membrane superposée pour fournir une deuxième couche de membrane recuite sélective par rapport à un gaz ;
(b) la fourniture dudit support abrasif dans un deuxième état de polissage régulé sur une deuxième surface de membrane abrasée par polissage de ladite deuxième couche de membrane recuite sélective par rapport à un gaz ; et
(c) le placement d'une troisième couche de matériau sélectif par rapport à un gaz comprenant un métal sélectif par rapport à un gaz sur ladite deuxième surface de membrane abrasée pour fournir une deuxième couche de membrane superposée.

3. Procédé selon la revendication 2, comprenant en outre :
(a) le recuit de ladite deuxième couche de membrane superposée pour fournir une troisième couche de membrane recuite sélective par rapport à un gaz ; (i) la fourniture dudit support abrasif dans un troisième état de polissage régulé sur une troisième surface de membrane abrasée par polissage de ladite troisième couche de membrane recuite sélective par rapport à un gaz ; et
(b) le placement d'une quatrième couche de matériau sélectif par rapport à un gaz comprenant un métal sélectif par rapport à un gaz sur ladite troisième surface de membrane abrasée pour fournir une troisième couche de membrane superposée.

4. Procédé selon la revendication 3, comprenant en outre :
(a) le recuit de ladite troisième couche de membrane superposée pour fournir une quatrième couche de membrane recuite sélective par rapport à un gaz ;
(b) la fourniture dudit support abrasif dans un quatrième état de polissage régulé sur une quatrième surface de membrane abrasée par polissage de ladite quatrième couche de membrane recuite sélective par rapport à un gaz ; et
(c) le placement d'une cinquième couche de matériau sélectif par rapport à un gaz comprenant un métal sélectif par rapport à un gaz sur ladite quatrième surface de membrane abrasée pour fournir une quatrième couche de membrane superposée.

5. Procédé selon la revendication 1, dans lequel ledit angle de contact est dans la plage de 0 à 45°.

6. Procédé selon la revendication 5, dans lequel lesdites répétitions se situent dans la plage de 1 à 4.
